# DEMANDE DE BREVET EUROPEEN

(11) **EP 0 972 678 A1**
(43) Date de publication de la demande: **19.01.2000**
(21) Numéro de dépôt: 99113388.5
(22) Date de dépôt: 10.07.1999
(51) Int. Cl.: B60Q 1/42

(54) **Commutateur de clignotants avec un dispositif de rappel à échappement**

(30) Priorité: 13.07.1998 FR 9808984
(71) Demandeur: Valeo Electronique, 94042 Créteil (FR)
(72) Inventeur: Le Toumelin, Rémi, 77400 Lagny (FR)
(74) Mandataire: Lemaire, Marc

(57) **Abrégé**

L'invention concerne un commutateur de clignotants muni d'un dispositif de rappel à échappement. Ce commutateur (1) comporte un boîtier (2) sur lequel est monté une manette de commande (12) agissant sur l'élément mobile (17) équipé de moyens d'indexation à trois positions stables, comprenant un plongeur (27) dont le becquet (29) coopère avec une came du boîtier (35). Un organe de rappel automatique (34) dont un doigt (53) est actionné par la came de la colonne de direction, comporte deux ailes divergentes (54, 55) susceptibles de repousser le plongeur (27) lorsque le volant tourne dans la direction indiquée.

## Description

L'invention concerne un commutateur d'éclairage et de signalisation, destiné à être monté sur un ensemble de commutateur de haut de colonne de direction de véhicule automobile, comprenant un boîtier, une manette de commande montée sur ledit boîtier de manière à pouvoir pivoter autour d'un axe sensiblement parallèle à l'axe de rotation du volant, un élément mobile disposé dans le boîtier et susceptible d'être déplacé par le pivotement de la manette en vue de la commande des clignotants,
des moyens d'indexation dans trois positions stables de l'élément mobile, ces moyens comportent un plongeur monté coulissant dans un logement de l'élément mobile et coopérant avec une came du boîtier sous la sollicitation de premiers moyens élastiques,
des moyens pour assurer la fonction de rappel automatique de la manette de commande et de l'élément mobile d'une position indexée extrême à sa position centrale suite à une rotation du volant dans le sens inverse de la direction indiquée, ces moyens comportant notamment un organe de rappel monté coulissant sur le boîtier et susceptible d'être maintenu en appui contre une surface de came de l'élément mobile par des deuxièmes moyens élastiques, ledit organe de rappel comportant un doigt susceptible de sortir du boîtier et de pivoter sous l'action d'une came de la colonne de direction lorsque l'élément mobile est dans une position indexée extrême.

Ce type de commutateur, comportant des moyens de rappel automatique de l'élément mobile vers la position médiane stable lorsque le volant tourne dans le sens opposé à la direction indiquée par des clignotants, est couramment utilisé dans les véhicules automobiles.

En général, l'organe de rappel comporte dans la direction opposée au doigt un bras de levier qui agit sur une paroi de l'élément mobile dans une direction sensiblement perpendiculaire à la direction des forces exercées sur le plongeur par les premiers moyens élastiques. En outre, le profil de la came du boîtier est dessiné de telle manière que les forces exercées par les premiers moyens élastiques, chargeant le plongeur sollicitent l'élément mobile vers la position médiane stable lorsque le doigt a été extrait de l'empreinte définissant la position indexée extrême. Il en résulte que selon la pente de l'empreinte, la force à exercer par le bras de levier sur l'élément mobile doit être nettement supérieure aux forces exercées par les premiers moyens élastiques, qui sont elles-mêmes calculées pour ramener positivement l'ensemble mobile vers la position médiane stable.

D'autre part, dans ces commutateurs il est nécessaire de prévoir un dispositif de forçage qui permet, lorsque l'utilisateur maintient manuellement la manette de commande dans une direction donnée et le volant tourne dans le sens opposé, de ne pas casser l'organe de rappel. C'est pourquoi le bras de levier agit sur un tiroir intermédiaire monté sur l'élément mobile avec interposition de ressorts complémentaires destinés à supporter les efforts considérables exercés par le bras de levier dans ce cas de figure.

L'invention s'est donné pour but de fournir un commutateur du type mentionné plus haut dans lequel les efforts exercés par l'organe de rappel sont limités au strict minimum.

L'invention s'est également donné pour but de supprimer le tiroir intermédiaire.

L'invention atteint son but par le fait que l'organe de rappel comporte des moyens pour repousser le plongeur à l'encontre des forces exercées par les premiers moyens élastiques lorsque l'élément mobile est dans une position indexée extrême et le volant tourne dans le sens inverse de la direction indiquée.

Avantageusement, l'élément mobile est monté dans le boîtier avec interposition de troisièmes moyens élastiques qui sollicitent l'élément mobile vers la position médiane stable.

Le profil de la came du boîtier est dessiné de telle manière que le plongeur, sollicité par les premiers moyens élastiques, puisse maintenir l'élément mobile dans une position indexée extrême, à l'encontre des forces exercées par les troisièmes moyens élastiques. En cas de forçage, l'organe de rappel appuie seulement sur le plongeur et compense les efforts exercés par les premiers moyens élastiques, tandis que l'utilisateur exerce sur la manette de commande le couple compensateur du couple dû aux troisièmes moyens élastiques.

Les avantageuses dispositions suivantes sont en outre adoptées :
- les moyens pour repousser le plongeur à l'encontre des premiers moyens élastiques comportent deux ailes formées sur l'organe de rappel dans le plan perpendiculaire à l'axe de rotation du volant, et divergeant dans la direction opposée à la direction du doigt ;
- le plongeur est disposé dans un plan médian de l'élément mobile et comporte un becquet coopérant avec la came du boîtier et une paroi convexe au-dessus du becquet susceptible de coopérer avec l'organe de rappel ;
- l'élément mobile est monté coulissant sur le boîtier et déplacé par le moyeu de la manette de commande ;
- la came du boîtier est constituée par une rampe qui comporte une empreinte centrale définissant la position médiane stable et deux empreintes à ses extrémités définissant les positions indexées extrêmes.

D'autres avantages et caractéristiques de l'invention ressortiront à la lecture de la description suivante faite à titre d'exemple et en référence aux dessins annexés dans lesquels :

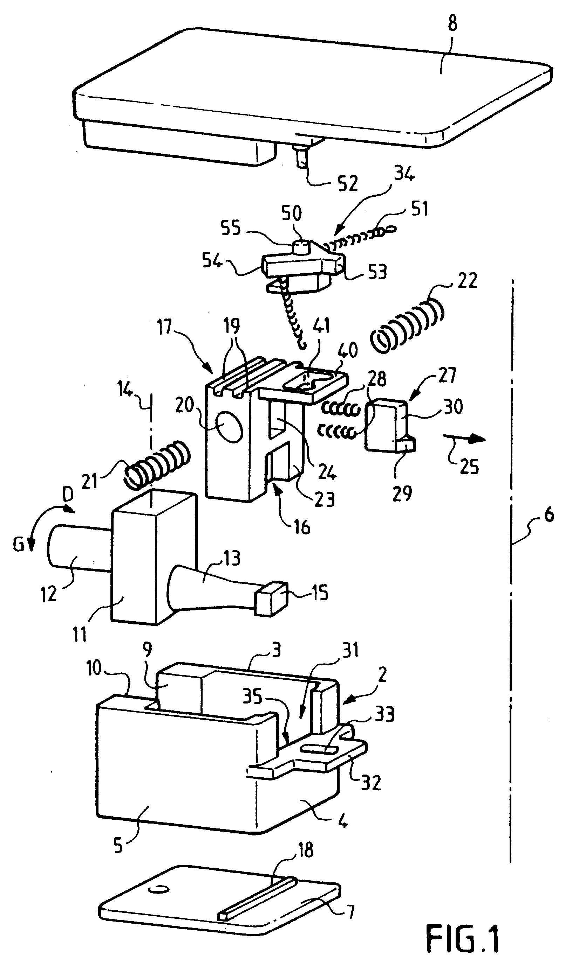

la figure 1 montre en éclaté les éléments essentiels du commutateur d'éclairage selon l'invention, dans lequel seules les pièces concernant les fonctions de commutation des clignotants, les moyens d'indexation et les moyens de rappel automatique sont représentés par souci de clarté ;
la figure 2 est une vue selon une direction parallèle à l'axe de la colonne de direction du commutateur de la figure 1 dans la position d'indexation médiane ;
la figure 3 est une vue semblable à celle de la figure 2, le commutateur étant dans la position d'indexation extrême à droite, et le volant tournant à droite ;
la figure 4 est une vue identique à celle de la figure 3 et montre le fonctionnement des moyens de rappel automatique lorsque le volant tourne vers la gauche.

Le commutateur d'éclairage et de signalisation montré sur les dessins comporte un boîtier 2 en forme de 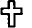 , délimité par trois parois 3, 4, 5 qui s'étendent dans des plans sensiblement parallèles à l'axe de rotation 6 de la colonne de direction. Ce boîtier 2 est obturé à ses extrémités par une plaque de fond 7 et une plaque supérieure 8.

Les extrémités des parois 4 et 5 comportent en vis-à-vis des surfaces cylindriques 9 et 10 entre lesquelles logent le moyeu 11 d'une manette de commande 12 qui s'étend vers l'extérieur du boîtier 2 et qui se prolonge à l'intérieur du boîtier par une tige 13. La manette de commande 12 peut pivoter autour de l'axe 14 du moyeu 11, cet axe de pivotement 14 étant sensiblement parallèle à l'axe de rotation 6 de la colonne de direction.

L'extrémité de la tige 13 comporte également un moyeu cylindrique 15 qui loge dans un évidemment 16 prévu dans un élément mobile 17 ou chariot susceptible de coulisser à l'intérieur du boîtier 2 entre les parois 3 et 5 grâce à des glissières 18 prévues sur les faces internes de la plaque de fond 7 et de la plaque supérieure 8 et coopérant avec des rainures 19 ménagées sur les faces opposées, dans la direction des axes de rotation 6 et 14 du chariot 17.

Le chariot 17 présente sur ses parois latérales faisant face aux parois 3 et 5, deux trous borgnes 20 dans lesquelles logent les extrémités de deux ressorts de rappel 21 et 22 qui prennent appui sur les parois 3 et 5 du boîtier 2.

Sur la paroi 23 du chariot 17, qui est en regard de la paroi 4 du boîtier 2, débouche un logement 24 dans lequel est monté coulissant dans une direction 25 dirigée vers l'axe de rotation 6 de la colonne de direction un plongeur 27 sollicité vers l'extérieur du logement 24 par des ressorts 28 prenant appui sur le fond du logement 24. Ce plongeur 27 présente, sur sa face dirigée vers l'axe de rotation 6, un becquet 29 du côté de la plaque de fond 7, et une surface convexe 30 du côté de la plaque supérieure 8.

La paroi 4 du boîtier 2, qui fait face à l'axe de rotation 6 de la colonne de direction, présente une ouverture 31 en regard de la surface convexe 30 du plongeur 27, et une oreille 32 qui s'étend perpendiculairement à l'axe de rotation 6 à partir d'un bord de l'ouverture 31. Cette oreille 32 présente une lumière oblongue 33 destinée à recevoir un téton de guidage d'un organe de rappel 34.

L'oreille 32 est disposée dans le plan du becquet 29 et elle présente, sur son bord dirigé vers l'intérieur du boîtier 2, une surface de came 35 solidaire du boîtier 2 qui s'étend sur toute la largeur de l'ouverture 31 et qui comporte une empreinte centrale 36 qui définit la position médiane stable et deux empreintes d'extrémité 37G, 37D qui définissent les positions indexées extrêmes du chariot 17.

Lorsqu'on fait pivoter la manette de commande 12 autour de l'axe de rotation 14 du moyeu 11 dans le sens gauche G ou droit D montré sur le dessins par une flèche, le moyeu d'extrémité 15 de la tige 13 entraîne le chariot 17 soit vers la paroi 3 soit vers la paroi 5 du boîtier, et comprime soit le ressort 22 soit le ressort 21. Le becquet 29 qui se trouvait dans l'empreinte centrale 36 coulisse alors sur la surface de came 35 et se déplace soit vers l'empreinte d'extrémité 37G, soit vers l'empreinte d'extrémité 37D. Lorsque le becquet 29 rejoint l'une de ces empreintes d'extrémité, les ressorts 28 appliquent le becquet 29 dans l'empreinte d'extrémité correspondante 37G ou 37D. Les ressorts de rappel 21, 22, les ressorts 28 et les profils des empreintes 37G, 37D sont calculés de telle manière que le plongeurs 27 maintienne le chariot 17 en position indexée droite ou en position gauche.

Le chariot 17 présente dans sa portion située au voisinage de la plaque supérieure 8 une plaque 40 qui s'étend à travers l'ouverture 31 de la paroi 4 du boîtier 2 perpendiculairement à l'axe de rotation 6 de la colonne de direction. Cette plaque 40 comporte un trou traversant 41 délimité du côté de l'axe de rotation 6 par une paroi 42 en forme de **V** dont la pointe 43 est dirigée dans le sens opposé à l'axe de rotation 6 de la colonne de direction.

Entre la plaque 40 du chariot 17 et l'oreille 32 du boîtier 2 est disposé l'organe de rappel 34. Cet organe de rappel 34 comporte sur sa face inférieure un téton de guidage, non visible sur les dessins, qui loge dans la lumière oblongue 33, et sur sa face supérieure un ergot 50 qui s'étend à travers le trou traversant 41 de la plaque 40 et qui est susceptible d'être en appui contre la paroi 42 en forme de **V** sous la sollicitation d'un ressort 51 qui prend appui sur une face de l'organe de rappel 34 éloignée de l'axe de rotation 6 de la colonne de direction et dont les extrémités sont fixées sur des plots 52 formés sur la paroi supérieure 8.

L'organe de rappel 34 comporte essentiellement un doigt 53 dirigé vers l'axe de rotation 6 de la colonne de direction et deux ailes 54, 55 divergentes dirigées dans le sens opposé vers le chariot 17.

Le boîtier 2 est symétrique par rapport au plan passant par l'axe de rotation 6 de la colonne de direction et par l'axe de pivotement 14 de la manette de commande 12. Le chariot 17, ainsi que le plongeur 27 sont également symétriques par rapport à leur plan médian parallèle au plan contenant les axes 14 et 6. Il en est de même de l'organe de rappel 34.

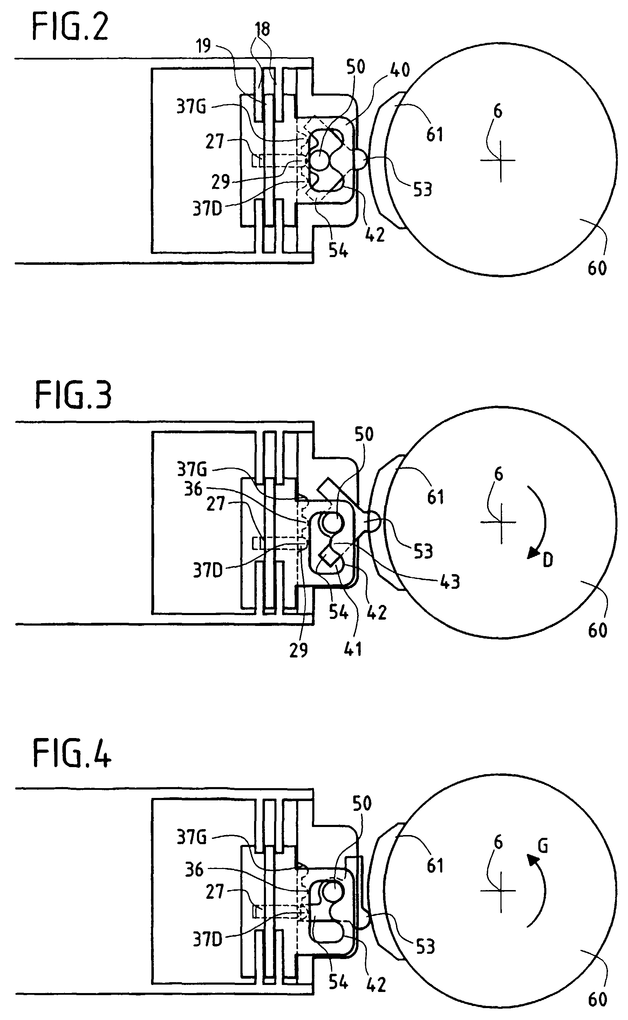

Lorsque le becquet 29 coopère avec l'empreinte médiane 36 de la surface de came 35, l'ergot 50 de l'organe de rappel 34 est en appui sur la pointe 43 de la paroi en forme de **V** 42. Dans cette situation, montrée sur la figure 2, le doigt 53 est éloigné de la colonne de direction 60 qui comporte une came 61 en regard du doigt 53.

Si le volant est dans la position roue droite au moment où l'on bascule le clignotant vers la droite, comme représenté sur la figure 3, le doigt 53 vient en appui sur la came 61, le becquet 29 se positionne dans l'empreinte 37D, et la surface convexe 30 se trouve dans un plan compris entre le plan médian du boîtier 2 et l'aile 54 de l'organe de rappel 34. Dès qu'on tourne le volant à droite dans le sens de la flèche D, la came 61 s'efface et le doigt 53 sort complètement du boîtier 2.

Si on continue à tourner le volant vers la droite, la came 61 repasse devant le doigt 53 en repoussant ce dernier qui bascule autour de l'axe de l'ergot 50 pour laisser le passage à la came 61. Au cours de ce pivotement de l'organe de rappel 34, les extrémités des ailes 54 et 55 ne butent sur aucun élément du commutateur 1. Lorsque la came 61 est passée au-delà du doigt 53, l'organe de rappel 34 reprend sa position normale, le doigt 53 dirigé vers l'axe de rotation 6 de la colonne de direction.

Lorsque le volant revient en sens contraire, c'est-à-dire vers la gauche, comme représenté par la flèche G sur la figure 4, la came 61 fait basculer le doigt 53 dans le sens inverse au sens précédent. L'aile 54 de l'organe de rappel 34 vient alors appuyer sur la surface convexe 30 du doigt 27, obligeant ce dernier à s'enfoncer dans le logement 24 du chariot 17.

Le becquet 29 n'est plus maintenu dans l'empreinte 37D, et le chariot 17 retourne en position centrale sous la sollicitation du ressort de rappel 22. Le plongeur 27 ne coopérant plus avec l'organe de rappel 34, le becquet 29 vient loger dans l'empreinte médiane 36, ce qui immobilise le chariot 17 dans une position médiane stable.

Toutefois, si l'utilisateur maintient manuellement la manette 12 dans la direction droite, lorsque le volant tourne vers la gauche, le chariot 17 est maintenu en place par l'utilisateur à l'encontre du couple exercé par le ressort de rappel 22, l'aile 54 appuie sur le plongeur 27, lors du passage de la came 61 devant le doigt 53, puis le becquet 29 revient dans l'empreinte 37D, lorsque la came 61 s'est effacée devant le doigt 53.

Dans cette situation de forçage, l'aile 54 exerce sur le plongeur 27 des efforts uniquement suffisants pour compenser l'action des ressorts 28.

En cas de forçage , le doigt 53 de l'organe de rappel 34 est soumis à des efforts modérés.

Dans l'exemple de réalisation décrit en détail ci-dessus, le chariot 17 est entraîné en translation lors du pivotement de la manette 12. Ce chariot 17 porte les ressorts de rappel 21, 22, le plongeur 27 et ses ressorts 28. Tous ces éléments peuvent être intégrés au moyeu 11 de la manette 12, auquel cas l'élément mobile constitué par le chariot subit un mouvement de rotation au lieu d'un mouvement de translation.

Il est également possible de remplir les fonctions des ressorts de rappel 21 et 22 par le plongeur 27, en adaptant le profil de la surface de came 35 du boîtier 2. Cette solution est particulièrement adaptée lorsque le chariot 17 subit un mouvement de rotation autour de l'axe de rotation 14 du moyen 11.

## Revendications

1. Commutateur d'éclairage et de signalisation, destiné à être monté sur un ensemble de commutateur de haut de colonne de direction de véhicule automobile, comprenant un boîtier (2), une manette de commande (12) montée sur ledit boîtier (2) de manière à pouvoir pivoter autour d'un axe (14) sensiblement parallèle à l'axe de rotation (6) du volant, un élément mobile (17) disposé dans le boîtier (2) et susceptible d'être déplacé par le pivotement de la manette (12) en vue de la commande des clignotants,
des moyens d'indexation dans trois positions stables de l'élément mobile (17), ces moyens comportent un plongeur (27) monté coulissant dans un logement (24) de l'élément mobile (17) et coopérant avec une came (35) du boîtier sous la sollicitation de premiers moyens élastiques (28),
des moyens pour assurer la fonction de rappel automatique de la manette de commande (12) et de l'élément mobile (17) d'une position indexée extrême (37G, 37D) à sa position centrale (36) suite à une rotation du volant dans le sens inverse de la direction indiquée, ces moyens comportant notamment un organe de rappel (34) monté coulissant sur le boîtier (2) et susceptible d'être maintenu en appui contre une surface de came (42) de l'élément mobile (17) par des deuxièmes moyens élastiques (51), ledit organe de rappel (34) comportant un doigt (53) susceptible de sortir du boîtier (2) et de pivoter sous l'action d'une came (61) de la colonne de direction lorsque l'élément mobile (17) est dans une position indexée extrême,
caractérisé par le fait que l'organe de rappel (34) comporte des moyens pour repousser le plongeur (27) à l'encontre des forces exercées par les premiers moyens élastiques (28) lorsque l'élément mobile (17) est dans une position indexée extrême et le volant tourne dans le sens inverse de la direction indiquée.

2. Commutateur selon la revendication 1, caractérisé par le fait que l'élément mobile (17) est monté dans le boîtier avec interposition de troisièmes moyens élastiques (21, 22) qui sollicitent l'élément mobile (17) vers la position médiane stable.

3. Commutateur selon l'une des revendications 1 ou 2, caractérisé par le fait que les moyens pour repousser le plongeur (27) à l'encontre des premiers moyens élastiques (28) comportent deux ailes (54, 55) formées sur l'organe de rappel (34) dans le plan perpendiculaire à l'axe de rotation (6) du volant, et divergeant dans la direction opposée à la direction du doigt (53).

4. Commutateur selon l'une quelconque des revendications 1 à 3, caractérisé par le fait que le plongeur (27) est disposé dans un plan médian de l'élément mobile (17) et comporte un becquet (29) coopérant avec la came (35) du boîtier et une paroi convexe (30) au-dessus du becquet (29) susceptible de coopérer avec l'organe de rappel (34).

5. Commutateur selon l'une quelconque des revendications 1 à 4, caractérisé par le fait que l'élément mobile (17) est monté coulissant sur le boîtier (2) et déplacé par le moyeu (15) de la manette de commande (12).

6. Commutateur selon l'une quelconque des revendications 1 à 5, caractérisé par le fait que la came (35) du boîtier est constituée par une rampe qui comporte une empreinte centrale (36) définissant la position médiane stable et deux empreintes (37D, 37G) à ses extrémités définissant les positions indexées extrêmes.
